# EUROPÄISCHE PATENTSCHRIFT

(11) **EP 3 934 888 B1**
(45) Veröffentlichungstag und Bekanntmachung des Hinweises auf die Patenterteilung: **22.05.2024**
(21) Anmeldenummer: 20713833.0
(22) Anmeldetag: 04.03.2020
(51) Int. Cl.: B29C 64/118, B29C 64/295, B33Y 30/00, B29C 64/209

(54) **3D-DRUCKVORRICHTUNG MIT EINER TEMPERATURREGULATIONSEINRICHTUNG FÜR AUFGEBRACHTES DRUCKMATERIAL**
3D PRINTING DEVICE HAVING A TEMPERATURE CONTROL DEVICE FOR APPLIED PRINT MATERIAL
DISPOSITIF D'IMPRESSION 3D DOTÉ D'UN APPAREIL DE RÉGULATION DE TEMPÉRATURE POUR LE MATÉRIAU D'IMPRESSION APPLIQUÉ

(30) Priorität: 05.03.2019 DE 102019202942
(43) Veröffentlichungstag der Anmeldung: 12.01.2022
(73) Patentinhaber: Brose Fahrzeugteile SE & Co. Kommanditgesellschaft, Würzburg, 97076 Würzburg (DE); AIM3D GmbH, 18069 Rostock (DE)
(72) Erfinder: BEETZ, Stefan, 19089 Barnin (DE); LIEBERWIRTH, Clemens, 18059 Rostock (DE); MORRISON, Vincent, 18292 Krakow am See (DE)
(74) Vertreter: Maikowski & Ninnemann Patentanwälte Partnerschaft mbB
(86) Internationale Anmeldenummer: PCT/EP2020/055691
(87) Internationale Veröffentlichungsnummer: WO 2020/178335

(56) Entgegenhaltungen:
- EP-A1- 3 106 290
- EP-A1- 3 401 081
- CN-B- 105 984 142
- US-A1- 2017 157 845
- US-A1- 2017 334 137

## Beschreibung

Die vorgeschlagene Lösung betrifft eine 3D-Druckvorrichtung mit mindestens einer Druckdüse zum schichtweisen Aufbringen eines für die Herstellung eines zu druckenden Bauteils vorgesehenen Druckmaterials.

Beim 3D-Druck werden dreidimensionale Bauteile üblicherweise schichtweise aus einem oder mehreren Materialien aufgebaut. Als Materialien kommen hierbei beispielsweise Kunststoffen, Harze, Keramiken und/oder Metalle zum Einsatz. Beispielsweise ist in diesem Zusammenhang das sogenannte Schmelzschichtverfahren oder Strangablageverfahren (englisch "Fused Deposition Modeling", kurz FDM) bekannt. Hierbei wird ein Bauteil respektive ein Werkstück schichtweise aus einem schmelzfähigen Kunststoff oder einem geschmolzenen Material aufgebaut.

Für die schichtweise Herstellung des jeweiligen Bauteils wird über mindestens eine Druckdüse einer 3D-Druckvorrichtung, z.B. in Form eines sogenannten 3D-Druckers, Druckmaterial entlang einer Aufbringrichtung (von mehreren möglichen Aufbringrichtungen) an einer Druckplatte aufgebracht. Durch das an der Druckdüse austretende Druckmaterial wird dabei computergestützt schichtweise das jeweilige Bauteil aufgebaut.

Aus der WO 2018/039261 A1 ist in diesem Zusammenhang beispielsweise bekannt, ein in der Ausbringrichtung liegendes und bereits aufgebrachtes Druckmaterial einer ersten Schicht vorzuheizen, bevor über die Druckdüse eine weitere, zweite Schicht Druckmaterial aufgebracht wird. Ein entsprechendes Vorheizen der bereits aufgebrachten Schicht Druckmaterial dient dabei dazu, die Anhaftung des neu aufgebrachten Druckmaterials an der bereits vorhandenen Schicht zu verbessern. Die WO 2018/039261 A1 beschreibt hierbei beispielsweise die Nutzung eines Lasers oder eines heißen Gasstromes für die Erwärmung des in der Aufbringrichtung liegenden, bereits zuvor aufgebrachten Druckmaterials. Weitere 3D-Druckvorrichtungen sind aus der EP 3 106 290 A1, der CN105984142B, US 2017/334137 A1 oder der US 2017/157845 A1 bekannt.

Es ist vor diesem Hintergrund Aufgabe der vorgeschlagenen Lösung, eine 3D-Druckvorrichtung weiter zu verbessern.

Diese Aufgabe ist mit einer 3D-Druckvorrichtung nach Anspruch 1 gelöst.

Gemäß einem ersten Aspekt sieht dabei die vorgeschlagene Lösung vor, dass die 3D-Druckvorrichtung eine Temperaturregulationseinrichtung aufweist, die sowohl für eine Kühlung als auch für eine Erwärmung bereits aufgebrachten Druckmaterials im Bereich der Druckdüse eingerichtet und vorgesehen ist. Über eine Temperaturregulationsvorrichtung kann somit in der Umgebung und damit beispielsweise lokal unterhalb der Druckdüse vorhandenes Druckmaterial bei Bedarf gekühlt oder erwärmt werden.

Hierbei umfasst eine vorgeschlagene Temperaturregulationseinrichtung mehrere für eine Kühlung bereits aufgebrachten Druckmaterials vorgesehene Temperaturregulationselemente und mehrere für eine Erwärmung bereits aufgebrachten Druckmaterials vorgesehene Temperaturregulationselemente. Die Temperaturregulationseinrichtung umfasst ferner erste und zweite Träger, die sich ringförmig um die Druckdüse erstrecken und konzentrisch zueinander angeordnet sind, wobei die Temperaturregulationselemente an den ersten und zweiten Trägern der Temperaturregulationseinrichtung vorgesehen sind.

Bei den Temperaturregulationselementen kann es sich beispielsweise um Emitter für die Erwärmung bereits aufgebrachten Druckmaterials und mithin beispielsweise um einen Laser, eine LED und/oder einen Infrarotstrahler handeln. Unter einem Temperaturregulationselement werden aber auch Ausströmöffnungen für eine Fluidströmung mit erwärmtem, insbesondere erhitztem oder mit kühlendem Fluid verstanden.

Bei einer vorgeschlagenen 3D-Druckvorrichtung befinden sich entsprechende Temperaturregulationselemente an einem Abschnitt des ersten oder zweiten Trägers, der sich zumindest teilweise um die Druckdüse erstreckt und damit einen definierten Bereich entlang des Umfangs der Druckdüse für eine lokale Erwärmung oder Kühlung von Druckmaterial abgedeckt. Der jeweilige Träger ist ringförmig um die Druckdüse erstreckt ausgebildet. Der Temperaturregulationselemente aufweisende Abschnitt des Trägers, der sich zumindest teilweise um die Druckdüse erstreckt, kann somit dem Verlauf einer Kreislinie um die Druckdüse folgen.

In einer Ausführungsvariante weist die Temperaturregulationseinrichtung eine Steuerelektronik auf, die konfiguriert ist, unterschiedliche Temperaturregulationselemente in Abhängigkeit davon zu nutzen, in welche Aufbringungsrichtung die Druckdüse verstellt wird. Dies schließt beispielsweise ein, dass die Steuerelektronik konfiguriert ist, je nach Aufbringungsrichtung nur eines oder nur einige der mehreren Temperaturregulationselemente zu nutzen, um - zum Beispiel bezogen auf die Aufbringungsrichtung - vor oder hinter der Druckdüse aufgebrachtes Druckmaterial gezielt zu erwärmen oder zu kühlen.

Die Temperaturregulationselemente können sich hierbei auch an unterschiedlichen Trägern befinden, die beispielsweise gleichzeitig ein Strömungserzeugungselement, wie zum Beispiel eine Ringdüse um die Druckdüse, bilden.

Die vorgeschlagene Lösung schließt hierbei insbesondere eine Variante ein, bei der beispielsweise in Aufbringungsrichtung liegendes Druckmaterial erwärmt wird, um die Anhaftung nachfolgend aufgebrachten Druckmaterials zu verbessern. In diesem Zusammenhang lässt sich beispielsweise sicherstellen, dass das bereits aufgebrachte Druckmaterial auf eine verbindungsfähige Temperatur eingestellt wird und/oder - insbesondere bei mit Glasfasern gefüllten Materialien - das bereits ausgebrachte Druckmaterial noch soweit erwärmt ist, dass aus der Druckdüse hierauf neu aufgebrachtes Druckmaterial in das bereits aufgebrachte Druckmaterial eindringen kann. Zeitlich versetzt, zum Beispiel bei Verwendung eines anderen Druckmaterials in einem anderen Herstellungsprozess unter Nutzung derselben 3D-Druckvorrichtung oder für die Ausbildung eines bestimmten, insbesondere dünnwandigen Abschnitts des zu druckenden Bauteils, oder gleichzeitig zur einer Erwärmung von Druckmaterial ist es mit der vorgeschlagenen Temperaturregulationseinrichtung auch möglich, Druckmaterial zu kühlen, das gerade zuvor erst von der Druckdüse aufgebracht wurde. Eine solche Kühlung dient beispielsweise dazu, ein Abfließen oder Zerfließen des aufgebrachten Druckmaterials zu verhindern und ein Härten des Druckmaterials zu unterstützen. Auch kann vorgesehen sein, in Abhängigkeit von einer Bauzeit der aktuellen Schicht Druckmaterial und/oder in Abhängigkeit von einem herzustellenden Abschnitt des Bauteils, zum Beispiel einer Brücke oder einem Überhang, zwischen einer Kühlung und einer Erwärmung im Bereich der Druckdüse zu wechseln.

Über die vorgeschlagene 3D-Druckvorrichtung kann somit grundsätzlich die Flexibilität bei der Fertigung zu druckender dreidimensionaler Bauteile erhöht werden.

Die Temperaturregulationseinrichtung kann dementsprechend beispielsweise zur Erwärmung eines in der Aufbringrichtung liegenden, bereits aufgebrachten Druckmaterials eingerichtet und vorgesehen sein, auf das durch die Düse neues Druckmaterial aufzubringen ist. Die Temperaturregulationseinrichtung ist hier folglich eingerichtet und vorgesehen, bereits aufgebrachtes Druckmaterial zu erwärmen, wenn durch die Druckdüse hieran neues Druckmaterial aufgebracht wird.

Die Temperaturregulationsseinsrichtung kann ferner zur Kühlung von durch die Drogendüse aufgebrachten Druckmaterials eingerichtet und vorgesehen sein, das durch die Druckdüse zuvor aufgebracht wurde. Über die Temperaturregulationseinrichtung ist somit Druckmaterial kühlbar, nachdem dieses von der Düse aufgebracht wurde und gegebenenfalls während die Druckdüse weiter in der Aufbringrichtung zum Aufbringen einer neuen Schicht Druckmaterials verstellt wird. So kann mithilfe der Temperaturregulationseinrichtung in einer Ausführungsvariante zum Beispiel eine kühlende Fluidströmung in Richtung soeben durch die Druckdüse aufgebrachten Druckmaterials erzeugbar sein. Hierbei wird kühlendes Fluid in Richtung soeben durch die Druckdüse aufgebrachten Druckmaterials über die Temperaturregulationseinrichtung ausgeblasen.

Grundsätzlich kann zur Erwärmung und/oder zur Kühlung aufgebrachten Druckmaterials mindestens eine Fluidströmung mit erwärmtem oder kühlendem Fluid über die Temperaturregulationseinrichtung erzeugbar sein. Insbesondere kann vorgesehen sein, dass über die Temperaturregulationseinrichtung wahlweise erwärmtes oder kühlendes Fluid für eine Fluidströmung nutzbar ist und hierfür beispielsweise unterschiedliche Fluidreservoirs vorhanden sind oder die Temperaturregulationseinrichtung mindestens ein Wärme- und/oder ein Kühlelement aufweist, um ein auszublasendes Fluid gezielt zu erwärmen oder zu kühlen.

In einer möglichen Weiterbildung weist mindestens einer der Träger mindestens eine Ausströmöffnung für das Fluid auf. Ein entsprechender Träger definiert somit einen Fluidpfad für die zu erzeugende Fluidströmung, sodass die Fluidströmung an der mindestens einer Ausströmöffnung des Trägers in Richtung des zu kühlenden oder zu erwärmenden Druckmaterials geleitet wird. Der jeweilige Träger kann hierbei zumindest teilweise im Bereich der Druckdüse vorgesehen sein, sodass aus der mindestens ein Ausströmöffnung ausströmendes Fluid in unmittelbarer Umgebung der Druckdüse auf das bereits aufgedruckte Druckmaterial trifft.

Eine Ausführungsvariante sieht beispielsweise vor, dass an mindestens einem der Träger wenigstens eine erste Ausströmöffnung für die Erzeugung einer zur Erwärmung des Druckmaterials vorgesehenen Fluidströmung und wenigstens eine zweite Ausströmöffnung für die Erzeugung einer zur Kühlung des Druckmaterials vorgesehenen Fluidströmung vorhanden sind. In diesem Zusammenhang können folglich unterschiedliche Ausströmöffnungen an einem der Träger vorhanden sein, an die je nach Anwendungsfall erwärmtes Fluid oder kühlendes Fluid gefördert wird. Selbstverständlich kann auch mindestens eine Ausströmöffnung eines Trägers dazu eingerichtet und vorgesehen sein, hierüber unterschiedliche Fluide und/oder ein Fluid mit unterschiedlichen Temperaturen ausströmen zu lassen.

Verschiedene Träger können auch für die Erzeugung verschiedener Fluidströmungen und/oder für verschiedene Fluide an der 3D-Druckvorrichtung vorgesehen sein. Je nachdem, welche Art von Fluidströmung (bezogen auf die Temperatur und/oder eine Ausströmrichtung) oder welche Art von Fluid, insbesondere welche Art von Gas, gezielt ausgeströmt werden soll, kann zum Beispiel der eine oder der andere Träger nutzbar sein.

In einer Ausführungsvariante weist die Temperaturregulationseinrichtung mindestens ein Ventil, insbesondere ein Mehrwege-Ventil zur Steuerung des Zuflusses von unterschiedlichen Fluiden und/oder zur Steuerung des Zuflusses eines Fluids über unterschiedliche Fluidpfade auf. In der zuletzt genannten Variante stellt die Temperaturregulationseinrichtung unterschiedliche Fluidpfade zur Verfügung, um z.B. über einen ersten Fluidpfad erwärmtes Fluid und einen zweiten Fluidpfad kühlendes Fluid strömen zu lassen und schlussendlich in Richtung des aufgebrachten Druckmaterials zu leiten. Über das mindestens eine Ventil kann hierbei der Zufluss entsprechend reguliert werden, sodass ein Fluidpfad beispielsweise in Abhängigkeit von einer Stellung des Ventils nicht nutzbar ist, während der ein anderer Fluidpfad zur Verfügung steht.

Insbesondere kann die Temperaturregulationseinrichtung mit dem mindestens einen Ventil eingerichtet und vorgesehen sein, einen Zufluss eines erwärmten Fluids über einen anderen Fluidpfad zu steuern als den Zufluss eines kühlenden Fluid. Über das mindestens eine Ventil kann hierbei beispielsweise steuerbar sein, zu welchem oder welchen von mehreren unterschiedlichen Trägern und/oder zu welchen Ausströmöffnungen eines Trägers Fluid strömt. Welcher Träger und/oder welche Ausströmöffnung(en) mit Fluid versorgt werden, kann hierbei insbesondere davon abhängen, welches Fluid genutzt werden soll und/oder ob das Fluid zur Erwärmung oder zur Kühlung vorgesehen ist.

Alternativ oder ergänzend zu der Erzeugung einer Fluidströmung kann die Temperaturregulationseinrichtung mindestens einen Emitter für die Erwärmung bereits aufgebrachten Druckmaterials aufweisen. Ein solcher Emitter schließt beispielsweise einen Laser, eine LED oder einen Infrarotstrahler ein, über den im Bereich der Druckdüse Druckmaterial lokal durch Strahlungswärme erwärmt werden kann.

Grundsätzlich kann die Temperaturregulationseinrichtung mit mindestens einer Sensoreinrichtung elektronisch gekoppelt sein, um elektronisch (und damit zumindest teilweise oder vollständig automatisiert) den Grad einer Erwärmung oder Kühlung - und damit zum Beispiel die Temperatur eines genutzten Fluids oder die Menge einer abgestrahlten Strahlungswärme eines eventuellen Emitters - in Abhängigkeit von mindestens einem Sensorsignal zu steuern, das Indikativ für die Temperatur des zu erwärmenden oder zu kühlenden Druckmaterials ist. In dieser Ausführungsvariante ist somit eine Rückkopplung vorgesehen, um einen Energieeintrag respektive eine Kühlwirkung auf ein bestimmtes Maß zu begrenzen, der bzw. die abhängig von der Temperatur des Druckmaterials ist.

Die mindestens eine Sensoreinrichtung kann hierbei beispielsweise eine oder mehrere Wärmebildkameras umfassen, deren Bilddaten zur Berechnung einer Druckmaterialtemperatur computergestützt ausgewertet und zur Erzeugung eines Sensorsignals genutzt werden. Alternativ oder ergänzend können ein oder mehrere bewegliche Sensoren direkt am Düsenkopf elektronisch gesteuert verstellbar vorgesehen sein. Alternativ oder ergänzend kann ein fester oder nur geringfügig verstellbarer Sensor im Bereich des Düsenkopfes vorgesehen sein, der mithilfe eines beweglich gelagerten und elektronisch gesteuert verstellbaren Spiegels eine Temperatur des aufgebrachten Druckmaterials erfassen kann.

In einer Ausführungsvariante weist die Temperaturregulationseinrichtung eine Steuerelektronik auf, die konfiguriert ist, eine Erwärmung oder Kühlung in Abhängigkeit von der Aufbringungsrichtung zu steuern, in die die Druckdüse verstellt wird. Je nachdem, in welche von mehreren möglichen Aufbringungsrichtungen die Druckdüse gerade bezüglich einer Druckplattform verstellt wird, ist somit bei einer solchen Ausführungsvariante variierbar, ob über die Temperaturregulationseinrichtung eine Erwärmung oder Kühlung des Druckmaterials in der Umgebung der Druckdüse erfolgen soll und/oder ob nur ein Teil und dann auch welcher Teil der Temperaturregulationseinrichtung für die Erwärmung oder Kühlung genutzt wird. Weist die Temperaturregulationseinrichtung beispielsweise mehrere Träger und mehrere Ausströmöffnungen auf, ist die Steuerelektronik beispielsweise konfiguriert, nur denjenigen Träger und damit nur diejenigen Ausströmöffnungen mit Fluid zu versorgen, über die, für eine Erwärmung von Druckmaterial, eine Fluidströmung - in Aufbringungsrichtung - vor der Druckdüse erzeugbar ist oder über die, zur Abkühlung von Druckmaterial, eine Fluidströmung - entgegengesetzt zu der Aufbringungsrichtung - hinter der Druckdüse erzeugbar ist.

In einer Variante ist die Steuerelektronik beispielsweise konfiguriert, eine Erwärmung oder Kühlung in Abhängigkeit von der Aufbringungsrichtung zu steuern, indem ein verstellbarer Träger, z.B. eine Ringdüse, durch die Steuerelektronik gezielt mit der Aufbringungsrichtung (mithin einer Druckbahn) gedreht wird. Derart kann ein Kühlstrahl stets nach dem Druck ausgerichtet respektive bezogen auf die Aufbringungsrichtung nach hinten ausgerichtet sein, um soeben aufgebrachtes Druckmaterial zu kühlen. Gleichzeitig kann eine Wärmequelle vorlaufen und damit in die Aufbringungsrichtung gerichtet sein, um einen Bereich zu erwärmen, an dem in Kürze Druckmaterial aufgebracht werden wird.

Die vorstehend erörterten Varianten einer 3D-Druckervorrichtung können selbstverständlich auch in einer einzigen 3D-Druckvorrichtung verwirklicht sein.

Die beigefügten Figuren veranschaulichen exemplarisch mögliche Ausführungsvarianten der vorgeschlagenen Lösung
Hierbei zeigen:
- Figur 1: ausschnittsweise eine Ausführungsvariante einer nicht erfindungsgemäßen 3D-Druckvorrichtung mit Blick auf eine Druckdüse, an der ein ringförmig umlaufender Träger mit mehreren Temperaturregulationselementen für eine bedarfsweise Kühlung oder Erwärmung aufgebrachten Druckmaterials vorgesehen ist;
- Figur 2: eine erste Ausführungsvariante einer vorgeschlagenen 3D-Druckvorrichtung mit zwei konzentrischen, ringförmigen Trägern mit einer optionalen Ventilsteuerung für als Ausströmöffnungen ausgebildete Temperaturregulationselemente an den Trägern;
- Figur 3: in mit den Figuren 1 und 2 übereinstimmender Ansicht eine weitere Ausführungsvariante einer vorgeschlagenen 3D-Druckvorrichtung mit drei konzentrisch zueinander angeordneten, jeweils ringförmigen Trägern;
- Figur 4: schematisch und ausschnittsweise eine 3D-Druckvorrichtung, die mit einer Druckdüse gemäß einer der Figuren 1, 2 oder 3 ausgestattet sein kann, unter schematischer Veranschaulichung einer mit der entsprechenden Temperaturregulationseinrichtung gekoppelten Sensorik.

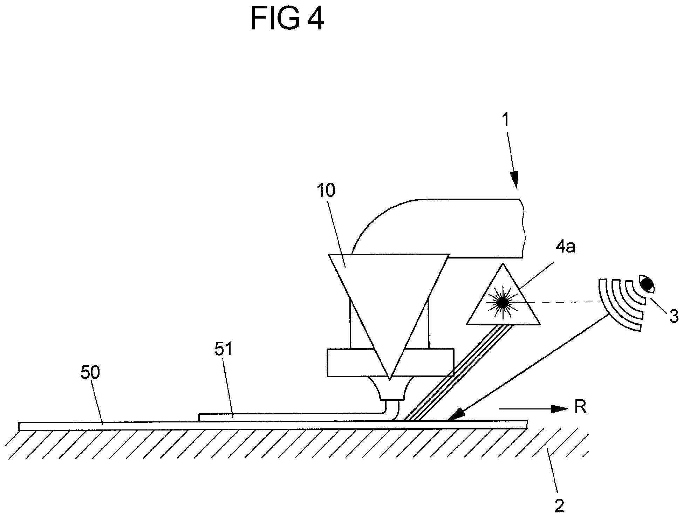

Die Figur 4 zeigt schematisch eine 3D-Druckvorrichtung 1, mit einer Druckdüse 10, über die Druckmaterial zum schichtweisen Aufbau eines Bauteils respektive Werkstücks auf eine Druckplattform 2 aufgebracht werden kann. Die Druckdüse 10 wird hierbei exemplarisch entlang einer Aufbringbringrichtung R verstellt.

In der der Figur 4 dargestellten Variante ist bereits eine Schicht Druckmaterial 50 auf der Druckplattform vorhanden, auf die eine zweite Schicht Druckmaterial 51 durch die Druckdüse 10 aufgebracht wird. Die dargestellte 3D-Druckvorrichtung arbeitet hierbei beispielsweise nach dem Schmelzschichtverfahren oder Strangablageverfahren (englisch "Fused Deposition Modeling", kurz FDM). Mit dem ersten Auftrag des Druckmaterials 50 auf der Druckplattform 2 beginnt gleichzeitig die Abkühlung des aufgebrachten Druckmaterials 50. Wenn der Druckkopf der 3D-Druckvorrichtung 1 mit der Druckdüse 10 wieder an dieselbe Stelle kommt, ist das zuvor aufgetragene Druckmaterial 50 deutlich kühler als das neue aufzubringende Druckmaterial 51. Dies kann die Verbindung der beiden Materialstränge negativ beeinflussen, wie auch die Festigkeit des hiermit hergestellten Bauteils.

Vor diesem Hintergrund sieht die Ausführungsvariante der Figur 4 vor, über einen Laser 4a in Aufbringungsrichtung R liegendes Druckmaterial 50 der zuvor aufgebrachten Schicht 50 lokal zu erwärmen. Durch diese lokale Erwärmung mittels des Lasers 4a (oder einem anderen Emitter, wie zum Beispiel einem Infrarotstrahler, oder mittels einer Fluidströmung mit erwärmten Fluid) und dem damit verbundenen Energieeintrag in das Druckmaterial 50 wird ein Bereich des bereits aufgebrachten Druckmaterials 50 erwärmt, auf den nachfolgend gleich das neue Druckmaterial 51 aufgebracht wird. Hierdurch kann die Anhaftung des neu aufgebrachten Druckmaterials 51 an dem zuvor aufgebrachten Druckmaterial 50 verbessert werden. Auch lassen sich hiermit hybride Druckverfahren effizienter umsetzen, bei denen Kunststoffmaterial mit metallischen Pulver gedruckt wird. Durch gezielten Wärmeeintrag kann hier das gedruckte Metallpulver nachträglich zum Schmelzen gebracht werden, um beispielsweise innerhalb des gedruckten Kunststoffs metallische Strukturen auszubilden, z.B. in Form von mindestens einer Leiterbahn.

Über eine Sensorik 3, die mit einer den Laser 4a aufweisenden Temperaturregulationseinrichtung 4 gekoppelt ist und eine oder mehrere Sensoreinrichtungen aufweist, wird der Energieeintrag in das bereits aufgebrachte Druckmaterial 50 in Abhängigkeit von einer ermittelten Temperatur des Druckmaterials 50 gesteuert. Die Sensorik 3 umfasst hierbei beispielsweise optische Messmittel und/oder mindestens einen Temperatursensor. Beispielsweise umfasst die Sensorik 3 alternativ oder zusätzlich zu einem Temperatursensor eine oder mehrere Wärmebildkameras und ist konfiguriert, computergestützt eine Temperatur des Druckmaterials 50 im Bereich der Druckdüse 10 zu berechnen und in Abhängigkeit von dieser computergestützt ermittelten Temperatur den Laser 4a anzusteuern.

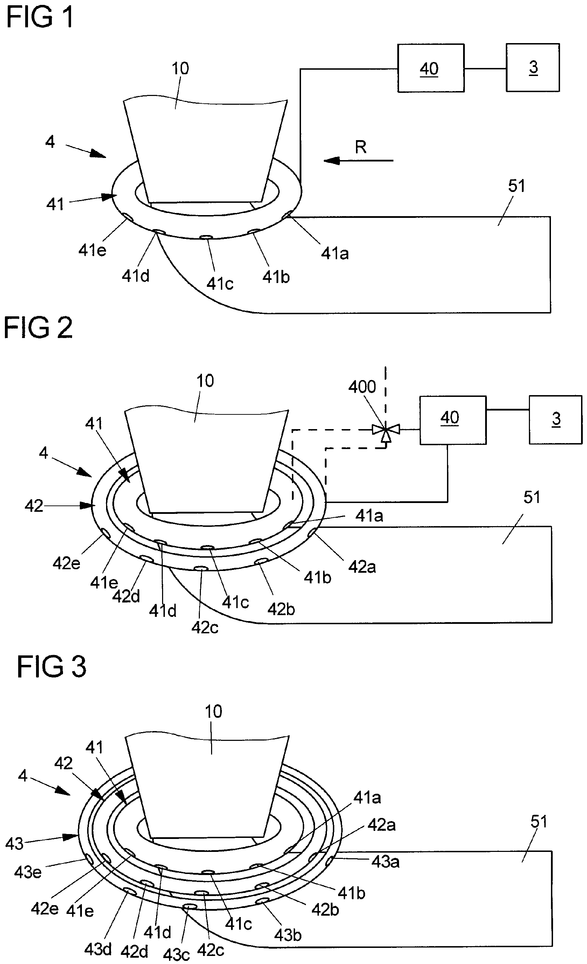

Bei einer nicht erfindungsgemäßen Ausführungsvariante der Figur 1 ist im Bereich der Druckdüse 10 ein ringförmig umlaufender Träger 41 vorgesehen. Dieser ringförmige Träger 41 ist Teil einer Temperaturregulationseinrichtung 4, über die in einem vorherigen Zyklus aufgebrachtes Druckmaterial 50 einer ersten Schicht gezielt erwärmt und/oder über die soeben auf diese Schicht aufgebrachtes Druckmaterial 51 einer nachfolgenden Schicht gezielt gekühlt werden kann.

Hierfür sind an dem Träger 41 mehrere Temperaturregulationselemente 41a bis 41e zueinander beabstandet, insbesondere äquidistant zueinander beabstandet und über den äußeren Umfang des ringförmigen Trägers 41 verteilt vorgesehen. Jedes Temperaturregulationselement 41a bis 41e kann dabei durch einen Emitter für die Erzeugung von Strahlungswärme oder durch eine Ausströmöffnung für Fluid gebildet sein, sodass der Träger 41 insbesondere als Emitterring oder Ringdüse ausgebildet sein kann. Je nachdem, ob Druckmaterial 50, 51 gekühlt oder erwärmt werden soll und in welche Aufbringrichtung R die Druckdüse 10 zum schichtweisen Aufbringen neuen Druckmaterials 51 verstellt wird, sind gegebenenfalls nur ein einzelnes oder nur ein Teil der Temperaturregulationselemente 41a bis 41e aktiv.

Sind beispielsweise mehrere Ausströmöffnungen 41a bis 41e an dem ringförmigen Träger umfangsseitig verteilt vorgesehen, kann beispielsweise erwärmtes Fluid an in der Anbringungsrichtung R liegenden Ausströmöffnungen 41d und 41e ausströmen, um vor und unterhalb der Druckdüse 10 liegendes Druckmaterial 50 einer bereits vorhandenen Schicht lokal zu erwärmen, insbesondere vorzuheizen, bevor an der Druckdüse 10 ausgebrachtes Druckmaterial 51 für eine nachfolgende Schicht in Kontakt mit diesem Druckmaterial 50 kommt. Alternativ oder ergänzend kann an entgegengesetzt zur Anbringungsrichtung R liegenden Ausströmöffnungen 41a, 41b kühlendes Fluid ausströmen, sodass eine kühlende Fluidströmung in Richtung des soeben aufgebrachten Druckmaterials 51 erzeugt werden kann, um eine Zerfließen dieses Druckmaterials 51 zu verhindern. Dementsprechend kann mit der dargestellten Temperaturregulationseinrichtung 4 wahlweise aufgebrachtes Druckmaterial 50, 51 erwärmt respektive aktiv beheizt oder gekühlt werden. Hierbei kann in Abhängigkeit der Bauzeit der aktuellen Schicht und/oder in Abhängigkeit von dem herzustellenden Bauteilabschnitt gezielt gesteuert werden, ob eine Erwärmung oder eine Kühlung erfolgen und insbesondere in welche Richtung und an welcher Stelle / an welchen Stellen entlang des Umfangs der Druckdüse 10 eine Fluidströmung erzeugt werden soll.

Zur Automatisierung umfasst die Temperaturregulationseinrichtung 4 eine Steuerelektronik 40. Diese Steuerelektronik 40 kann dann auch beispielsweise mit der Sensorik 3 gekoppelt sein, um den Grad der Erwärmung und/oder Kühlung in Abhängig davon zu steuern, welche Temperatur das entsprechende Druckmaterial 50 oder 51 aufweist.

In einer Variante ist die Steuerelektronik 40 konfiguriert, eine Erwärmung oder Kühlung in Abhängigkeit von der Aufbringungsrichtung zu steuern, indem der Träger 41 um die Druckdüse 10d drehbar gelagert und durch die Steuerelektronik gezielt mit der Aufbringungsrichtung (mithin einer Druckbahn) drehbar ist. Derart kann ein Kühlstrahl stets bezogen auf die Aufbringungsrichtung nach hinten ausgerichtet sein, um soeben aufgebrachtes Druckmaterial zu kühlen. Gleichzeitig kann eine Erwärmung in die Aufbringungsrichtung gerichtet sein, um einen Bereich zu erwärmen, an dem in Kürze Druckmaterial aufgebracht werden wird. Alternativ oder ergänzend können die Ausströmöffnungen 41a bis 41e über Ventile, insbesondere piezoelektrischen Ventile, gezielt einzeln oder gruppenweise elektronisch gesteuert schließbar und öffenbar sein., um eine Kühlung und/oder Erwärmung gezielt ausrichten zu können, insbesondere in Abhängigkeit von einer aktuellen Aufbringungsrichtung des Druckmaterials und damit einer Druckbahn.

Anstelle eines einzelnen Trägers 41 sieht die erfindungsgemäße Ausführungsvariante der Figur 2 zwei ringförmige und konzentrisch zueinander um die Druckdüse 10 verlaufende Träger 41 und 42 der Temperaturregulationseinrichtung 4 vor. Hierbei werden beispielsweise über einen innen liegenden Träger 41 und dessen Ausströmöffnungen 41a bis 41e lediglich zur Erwärmung des Druckmaterials 50 vorgesehene Fluidströmungen erzeugt. Über Ausströmöffnungen 42a bis 42e des außen liegenden Trägers 42 werden demgegenüber jeweils Fluidströmungen mit kühlendem Fluid erzeugt. Beispielsweise handelt es sich in beiden Fällen um dasselbe Fluid, z.B. Luft. Hierbei kann die Luft wahlweise erwärmt werden oder ungewärmt oder sogar zusätzlich abgekühlt zu dem einen Träger 41 oder dem anderen Träger 42 gefördert werden, je nachdem, ob die Luft zur Erwärmung oder zur Kühlung genutzt und über welchen der Träger 41, 42 diese Luft abgeblasen werden soll. Beispielsweise wird die Luft über einen Druckluftanschluss bereitgestellt.

Zur Steuerung des Zuflusses an die Träger 41, 42 kann optional eine Ventilsteuerung mit mindestens einem (Mehrwege-) Ventil 400 vorhanden sein. Dieses Ventil 400 wird dann ebenfalls über die Steuerelektronik 40 der Temperaturregulationseinrichtung 4 gesteuert.

Bei der ebenfalls erfindungsgemäße Ausführungsvariante der Figur 3 sind drei konzentrisch um die Druckdüse 10 verlaufende ringförmige Träger 41, 42 und 43 vorgesehen. Über einen zusätzlichen äußeren ringförmigen Träger 43 mit Ausströmöffnungen 43a bis 43e kann beispielsweise zusätzlich zu warmer und kalter Luft ein alternatives Prozessgas bei Bedarf ausgeströmt werden. Ein solches zur Kühlung und/oder zu Erwärmung verwendetes Prozessgas kann beispielsweise genutzt werden, wenn ein reaktives Druckmaterial (zum Beispiel ein kohlenstofffaserverstärkter Kunststoff, ein glasfaserverstärkter Kunststoff oder ein bestimmtes Metallpulver oder Bindemittel) gedruckt werden soll, das bei einer Kühlung oder Erwärmung mit Luft unerwünscht oxidieren würde.

Bei jeder der dargestellten Ausführungsvariante der Figuren 1, 2 und 3 kann die Temperaturregulationseinrichtung 4 geeignete Wärme- und/oder Kühlelemente aufweisen, um ein jeweiliges zu verwendetes Fluid bei Bedarf zu erwärmen oder abzukühlen. Ferner ist selbstverständlich die Verwendung von Luft als Fluid für die Erzeugung einer wärmenden oder kühlenden Fluidströmung lediglich beispielhaft zu verstehen. So kann beispielsweise auch bei der Ausführungsvariante der Figuren 1 oder 2 ein Prozessgas, insbesondere ein inertes Prozessgas verwendbar sein.

Mit den dargestellten Ausführungsvarianten ist beispielsweise ein Schmelzschichtverfahren mit PA66 GF35 ohne Weiteres effektiv realisierbar. Hierbei ist einerseits - je nach herzustellendem konstruktionsbedingten und/oder materialbedingtem Bedarf - eine aktive Beheizung bereits zuvor aufgebrachten Druckmaterials 50 mit warmer (ca. 150°C heißer) Luft umsetzbar ist, um eine gute Anhaftung zu erzielen, andererseits auch, aber zum Beispiel bei Abschnitten des Bauteils mit kleinem Querschnitt und/oder geringer Wanddicke, eine Kühlung des soeben aufgebrachten Druckmaterials 51 vorzusehen, um ein Ab- oder zerfließen dieses Druckmaterials 51 zu verhindern. Über die Temperaturregulationseinrichtung 4 wird hierbei im Bereich der Druckdüse 10 und damit am Druckkopf der 3D-Druckvorrichtung eine entsprechende Bauteilheizung und -kühlung integriert, beispielsweise entsprechend der Ausführungsvariante der Figur 2 über mehrere ringförmig um die Druckdüse 10 umlaufende Träger 41, 42, 43 mit jeweils mehreren Ausströmöffnungen 41a-41e, 42a-42e.

### Bezugszeichenliste

- 1: 3D-Druckvorrichtung
- 10: Druckdüse
- 2: Druckplattform
- 3: Sensorik
- 4: Temperaturregulationseinrichtung
- 40: Steuerelektronik
- 41,42,43: Träger
- 41a - 41e: Ausströmöffnung / Emitter (Temperaturregulationselement)
- 42a - 42e: Ausströmöffnung / Emitter (Temperaturregulationselement)
- 43a - 43e: Ausströmöffnung / Emitter (Temperaturregulationselement)
- 4a: Laser
- 400: Mehrwegeventil
- 50, 51: Druckmaterial
- R: Aufbringrichtung

## Patentansprüche

1. 3D-Druckvorrichtung, mit mindestens einer Druckdüse (10) zum schichtweisen Aufbringen eines für die Herstellung eines zu druckenden Bauteils vorgesehenen Druckmaterials (50, 51) entlang einer Aufbringrichtung (R), wobei die 3D-Druckvorrichtung (1) eine Temperaturregulationseinrichtung (4) aufweist,
**dadurch gekennzeichnet, dass**
die Temperaturregulationseinrichtung (4) mehrere für eine Kühlung bereits aufgebrachten Druckmaterials (50, 51) vorgesehene Temperaturregulationselemente (41a-41e; 41a-42e; 43a-43e) und mehrere für eine Erwärmung bereits aufgebrachten Druckmaterials (50, 51) vorgesehene Temperaturregulationselemente (41a-41e; 41a-42e; 43a-43e) umfasst, wobei die Temperaturregulationseinrichtung (4) erste und zweite Träger (41, 42, 43) umfasst, die sich ringförmig um die Druckdüse (10) erstrecken und konzentrisch angeordnet sind, und wobei die Temperaturregulationselemente (41a-41e; 41a-42e; 43a-43e) an den ersten und zweiten Trägern (41, 42, 43) der Temperaturregulationseinrichtung (4) vorgesehen sind.

2. 3D-Druckvorrichtung nach Anspruch 1, **dadurch gekennzeichnet, dass** die für eine Erwärmung vorgesehenen Temperaturregulationselemente (42a-42e; 43a-43e; 41a-41e) zur Erwärmung eines in der Aufbringrichtung (R) liegenden, bereits aufgebrachten Druckmaterials (50) eingerichtet und vorgesehen sind, auf das durch die Druckdüse (10) neues Druckmaterial aufzubringen ist.

3. 3D-Druckvorrichtung nach Anspruch 1 oder 2, **dadurch gekennzeichnet, dass** die für eine Kühlung vorgesehenen Temperaturregulationselemente (41a-41e; 42a-42e; 43a-43e) zur Kühlung von durch die Druckdüse aufgebrachten Druckmaterials (51) eingerichtet und vorgesehen ist, nachdem dieses Druckmaterial (51) durch die Druckdüse (10) aufgebracht wurde.

4. 3D-Druckvorrichtung nach einem der Ansprüche 1 bis 3, **dadurch gekennzeichnet, dass** zur Erwärmung und/oder Kühlung aufgebrachten Druckmaterials (50, 51) über die Temperaturregulationseinrichtung (4) mindestens eine Fluidströmung mit erwärmtem oder kühlendem Fluid erzeugbar ist.

5. 3D-Druckvorrichtung nach Anspruch 4, **dadurch gekennzeichnet, dass** die Temperaturregulationselemente mindestens einer Ausströmöffnung (41a-41e, 42a-42e, 43a-43e) für das Fluid aufweisen.

6. 3D-Druckvorrichtung nach Anspruch 5, **dadurch gekennzeichnet, dass** an dem ersten oder zweiten Träger (41, 42, 43) wenigstens eine erste Ausströmöffnung (41a-41e) für die Erzeugung einer zur Erwärmung des Druckmaterials (50) vorgesehenen Fluidströmung und wenigstens eine zweite Ausströmöffnung (41a-41e) für die Erzeugung einer zur Kühlung des Druckmaterials (50) vorgesehenen Fluidströmung vorhanden sind.

7. 3D-Druckvorrichtung nach Anspruch 5 oder 6, **dadurch gekennzeichnet, dass** die ersten und zweiten Träger (41, 42, 43) für die Erzeugung verschiedener Fluidströmungen und/oder für verschiedene Fluide an der 3D-Druckvorrichtung vorgesehen sind.

8. 3D-Druckvorrichtung nach einem der Ansprüche 4 bis 7, **dadurch gekennzeichnet, dass** die Temperaturregulationseinrichtung (4) mindestens ein Ventil (400) zur Steuerung des Zuflusses von unterschiedlichen Fluiden und/oder zur Steuerung des Zuflusses eines Fluids über unterschiedliche Fluidpfade aufweist.

9. 3D-Druckvorrichtung nach Anspruch 8, **dadurch gekennzeichnet, dass** die Temperaturregulationseinrichtung (4) mit dem mindestens einen Ventil (400) eingerichtet und vorgesehen ist, einen Zufluss eines erwärmten Fluids über einen anderen Fluidpfad zu steuern als den Zufluss eines kühlenden Fluids.

10. 3D-Druckvorrichtung nach einem der vorhergehenden Ansprüche, **dadurch gekennzeichnet, dass** die für eine Erwärmung vorgesehenen Temperaturregulationselemente mindestens einen Emitter (41a-41e, 42a-42e, 43a-43e) für die Erwärmung bereits aufgebrachten Druckmaterials (50) aufweisen.

11. 3D-Druckvorrichtung nach einem der vorhergehenden Ansprüchen, **dadurch gekennzeichnet, dass** die Temperaturregulationseinrichtung (4) eine Steuerelektronik (40) aufweist, die konfiguriert ist, eine Erwärmung oder Kühlung in Abhängigkeit von der Aufbringungsrichtung (R) zu steuern, in die die Druckdüse (10) verstellt wird.

12. 3D-Druckvorrichtung nach Anspruch 11, **dadurch gekennzeichnet, dass** die Steuerelektronik (40) konfiguriert ist, unterschiedliche Temperaturregulationselemente (41a-41e; 41a-42e; 43a-43e) in Abhängigkeit davon zu nutzen, in welcher Aufbringungsrichtung (R) die Druckdüse (10) verstellt wird.

13. 3D-Druckvorrichtung nach einem der vorhergehenden Ansprüchen, **dadurch gekennzeichnet, dass** ein dritter ringförmiger Träger (43) vorgesehen ist.

14. 3D-Druckvorrichtung nach Anspruch 13, **dadurch gekennzeichnet, dass** der dritte ringförmige Träger (43) Ausströmöffnungen (43a-43e) zum Ausströmen von inertem Prozessgas umfasst.

## Claims

1. A 3D printing device having at least one printing nozzle (10) for a layer-by-layer application of a printing material (50, 51) provided for the production of a component to be printed along a direction of application (R), wherein the 3D printing device has a temperature control device (4),
**characterized in that**
the temperature control device (4) comprises a plurality of temperature control elements (41a-41e; 41a-42e; 43a-43e) provided for cooling already applied printing material (50, 51) and a plurality of temperature control elements (41a-41e; 41a-42e; 43a-43e) provided for warming already applied printing material (50, 51), wherein the temperature control device (4) comprises first and second supports (41, 42, 43) which each extend at least partially around the printing nozzle (10) and are arranged concentrically, and wherein the temperature control elements (41a-41e; 41a-42e; 43a-43e) are provided on sections of the first and second supports (41, 42, 43) of the temperature control device (4).

2. The 3D printing device as claimed in claim 1, **characterized in that** the temperature control elements (41a-41e; 41a-42e; 43a-43e) provided for warming are configured and provided for the purpose of warming already applied printing material (50) lying in the direction of application (R) and to which new printing material is to be applied by the printing nozzle (10).

3. The 3D printing device as claimed in claim 1 or 2, **characterized in that** the temperature control elements (41a-41e; 41a-42e; 43a-43e) provided for cooling are configured and provided for cooling printing material (51) applied by the printing nozzle after this printing material (51) has been applied by the printing nozzle (10).

4. The 3D printing device as claimed in one of claims 1 to 3, **characterized in that** at least one fluid flow with warmed or cooling fluid can be generated via the temperature control device (4) for the purpose of warming and/or cooling applied printing material (50, 51).

5. The 3D printing device as claimed in claim 4, **characterized in that** the temperature control elements comprise at least one outflow opening (41a-41e, 42a-42e, 43a-43e) for the fluid.

6. The 3D printing device as claimed in claim 5, **characterized in that** at least one first outflow opening (41a-41e) for generating a fluid flow provided to warm the printing material (50) and at least one second outflow opening (41a-41e) for generating a fluid flow provided to cool the printing material (50) are present on the first and second support (41, 42, 43).

7. The 3D printing device as claimed in claim 5 or 6, **characterized in that** the first and second supports (41, 42, 43) are provided on the 3D printing device for generating different fluid flows and/or for different fluids.

8. The 3D printing device as claimed in one of claims 4 to 7, **characterized in that** the temperature control device (4) has at least one valve (400) for controlling the inflow of different fluids and/or for controlling the inflow of a fluid via different fluid paths.

9. The 3D printing device as claimed in claim 8, **characterized in that** the temperature control device (4) is configured and provided with the at least one valve (400) to control an inflow of a warmed fluid via a different fluid path than the inflow of a cooling fluid.

10. The 3D printing device as claimed in one of the preceding claims, **characterized in that** the temperature control elements (41a-41e; 41a-42e; 43a-43e) provided for warming have at least one emitter (41a-41e, 42a-42e, 43a-43e) for warming already applied printing material (50).

11. The 3D printing device as claimed in one of the preceding claims, **characterized in that** the temperature control device (4) has an electronic control system (40) which is configured to control warming or cooling depending on the direction of application (R) in which the printing nozzle (10) is shifted.

12. The 3D printing device as claimed in claim 11, **characterized in that** the electronic control system (40) is configured to employ different temperature control elements (41a-41e; 41a-42e; 43a-43e) depending on in which direction of application (R) the printing nozzle (10) is shifted.

13. The 3D printing device as claimed in one of the preceding claims, **characterized in that** a third ring-shaped support (43) is provided.

14. The 3D printing device as claimed in claim 13, **characterized in that** the third ring-shaped support (43) comprises outflow openings (43a-43e) for outflowing inert process gas.

## Revendications

1. Dispositif d'impression 3D avec au moins une buse d'impression (10) destinée à appliquer par couche un matériau d'impression (50, 51) prévu pour la fabrication d'un composant à imprimer le long d'une direction d'application (R), dans lequel le dispositif d'impression 3D (1) présente un système de régulation de température (4),
**caractérisé en ce que**
le système de régulation de température (4) comprend plusieurs éléments de régulation de température (41a-41^{e} ; 41a-41^{e} ; 43a-43^{e}) prévus pour un refroidissement de matériau d'impression (50,5 1) déjà appliqué et plusieurs éléments de régulation de température (41a-41^{e} ; 41a-42^{e} ; 43a-43^{e}) prévus pour un chauffage de matériau d'impression (50, 51) déj) appliqué, dans lequel le système de régulation de température (4) comprend des premiers et des deuxièmes supports (41, 42, 43), qui s'étendent de manière annulaire autour de la buse d'impression (140) et sont disposés de manière concentrique, et dans lequel les éléments de régulation de température (41a-41e ; 41a-42e ; 43a-43e) sont prévus sur les premiers et deuxièmes supports (41, 42, 43) du système de régulation de température (4).

2. Dispositif d'impression 3D selon la revendication 1, **caractérisé en ce que** les éléments de régulation de température (42a-42^{e} ; 43a-43^{e} ; 41a-41^{e}) prévus pour un chauffage sont mis au point et sont prévus pour chauffer un matériau d'impression (50) déjà appliqué, se trouvant dans la direction d'application (R), et sur lequel un nouveau matériau d'impression est à appliquer par la buse d'impression (10).

3. Dispositif d'impression 3D selon la revendication 1 ou 2, **caractérisé ne ce que** les éléments de régulation de température (41a-41^{e} ; 42a-42^{e} ; 43a-43^{e}) prévus pour un refroidissement sont mis au point et sont prévus pour refroidir du matériau d'impression (51) appliqué par la buse d'impression après que ledit matériau d'impression (51) a été appliqué par la buse d'impression (10).

4. Dispositif d'impression 3D selon l'une quelconque des revendications 1 à 3, **caractérisé en ce qu'**au moins un écoulement de fluide avec du fluide chauffé ou de refroidissement peut être produit pour le chauffage et/ou le refroidissement de matériau d'impression (50, 51) appliqué par l'intermédiaire du système de régulation de température (4).

5. Dispositif d'impression 3D selon la revendication 4, **caractérisé en ce que** les éléments de régulation de température présentent au moins une ouverture pour flux sortant (41a-41e, 42a-42e, 43a-43e) pour le fluide.

6. Dispositif d'impression 3D selon la revendication 5, **caractérisé en ce qu'**au moins une première ouverture pour flux sortant (41a-41e) est présente pour la production d'un écoulement de fluide prévu pour chauffer le matériau d'impression (50) et au moins une deuxième ouverture pour flux sortant (41a-41e) est présente pour la production d'un écoulement de fluide prévu pour refroidir le matériau d'impression (50) sur le premier ou le deuxième support (41, 42, 43).

7. Dispositif d'impression 3D selon la revendication 5 ou 6, **caractérisé en ce que** les premier et deuxième support (41, 42, 43) sont prévus pour la production de différents écoulements de fluide et/ou pour différents fluides sur le dispositif d'impression 3D.

8. Dispositif d'impression 3D selon l'une quelconque des revendications 4 à 7, **caractérisé en ce que** le système de régulation de température (4) présente au moins une soupape (400) pour commander le flux arrivant de différents fluides et/ou pour commander le flux arrivant d'un fluide sur différents trajets de fluide.

9. Dispositif d'impression 3D selon la revendication 8, **caractérisé en ce que** le système de régulation de température (4) est mis au point et est prévu avec l'au moins une soupape (400) pour commander un flux arrivant d'un fluide chauffé sur un trajet de fluide autre que le flux arrivant d'un fluide de refroidissement.

10. Dispositif d'impression 3D selon l'une quelconque des revendications précédentes, **caractérisé en ce que** les éléments de régulation de température prévus pour un chauffage présentent au moins un émetteur (41a-41e, 42a-42e, 43a-43e) pour le chauffage de matériau d'impression (50) déjà appliqué.

11. Dispositif d'impression 3D selon l'une quelconque des revendications précédentes, **caractérisé en ce que** le système de régulation de température (4) présente une électronique de commande (40) qui est configurée pour commander un chauffage ou un refroidissement en fonction de la direction d'application (R), dans laquelle la buse d'impression (10) est ajustée.

12. Dispositif d'impression 3D selon la revendication 11, **caractérisé en ce que** l'électronique de commande (40) est configurée pour utiliser différents éléments de régulation de température (41a-41e ; 41a-42e ; 43a-43e) en fonction de la direction d'application (R), dans laquelle la buse d'impression (10) est ajustée.

13. Dispositif d'impression 3D selon l'une quelconque des revendications précédentes, **caractérisé en ce qu'**un troisième support (43) annulaire est prévu.

14. Dispositif d'impression 3D selon la revendication 13, **caractérisé en ce que** le troisième support (43) annulaire comprend des ouvertures pour flux sortant (43a-43e) pour faire sortir un gaz de traitement inerte.
